# EUROPEAN PATENT APPLICATION

(11) **EP 0 746 048 A2**
(43) Date of publication of application: **04.12.1996**
(21) Application number: 96303983.9
(22) Date of filing: 31.05.1996
(51) Int. Cl.: H01M 4/62

(54) **Electrochemical cell**

(30) Priority: 02.06.1995 US 459685; 02.06.1995 US 459682; 02.06.1995 US 459683; 02.06.1995 US 459684
(71) Applicant: Pacesetter Inc., Sylmar, California 91392-9221 (US)
(72) Inventor: Marincic, Nikola, Dr., Winchester, MA 01890 (US); Rabadjija, Luka, Dr., Newton, MA 02159 (US)
(74) Representative: Rees, David Christopher

(57) **Abstract**

The electrochemical cell includes an electrode structure (200) having a metal anode (208) coated with lithium mounted to one side of a polymeric separator (206). The electrode structure (200) also includes a cathode structure (204) having a active cathode material, such as polycarbon monoflouride, coated on an expanded screen current collector (202). The cathode structure (204) is mounted on an opposing side of the polymeric separator (206) . Side edges of the expanded screen current collector (202) are coined inwardly to prevent sharp tines formed alongside edges from damaging adjacent components within the electrochemical cell. The electrode structure (200) is mounted within a cell housing which is flooded with a liquid non-aqueous electrolyte. Appropriate electrical contracts are provided to the anode (208) and cathode (204).

## Description

The invention relates to electrochemical cells for use in powering implantable devices.

A wide range of implantable electronic devices are provided for surgical implantation into humans or animals. One common example is the cardiac pacemaker. Other examples of implantable devices include devices for stimulating or sensing portions of the brain, spinal cord, muscles, bones, nerves, glands or other body organs or tissues.

Implantable devices are becoming more and more complex and commonly include sophisticated data processing hardware such as microprocessors, memory devices, or other large scale integration (LSI) devices. Often, the devices are designed for transmitting signals to remote sensing devices. With the increase in the sophistication of implantable devices and in particular with the need to reliably transmit signals to sensors external to the body, the need for improved power cells for powering the implantable devices has increased greatly. There are, of course, limitations on the design and configuration of power cells for use in implantable devices, especially with regard to the size and shape thereof. Moreover, the power cells for the implantable devices must be highly reliable and be capable of providing an adequate amount of current and voltage for an extended period of time.

One type of power supply for use in an implantable device is an electrochemical cell. Examples include cells employing lithium as an anode material. Typically, within such cells, a metal foil anode coated with lithium is provided in combination with a cathode structure having a cathode material mounted on a current collector. The cathode material includes an active cathode compound, such as polycarbon monoflouride, bound to carbon by a single binder compound. A polymeric separator is positioned between the anode and the cathode material thereby forming an electrode structure. The electrode structure is mounted within a cell housing which is flooded with a liquid non-aqueous electrolyte. Appropriate electrical contacts are provided to the anode and cathode.

Within electrochemical cells, the formation of the cathode material is particularly important. As noted, the cathode material includes an active cathode compound, carbon and a binder material. The binder material must adequately bind the active cathode compound both to the carbon of the cathode material and to the current collector on which the cathode material is mounted. Adequate binding must be achieved without unduly limiting or hindering the electrical characteristics of the active cathode compound. The binder must also achieve adequate mechanical coupling of the cathode material to the current collector such that the cathode material does not separate from the current collector during operation of the electrochemical cell. If an inadequate binder material is employed, the cathode material may peel away from the current collector during use of the electrochemical cell. Such is a particular problem for electrochemical cells used within implantable medical devices since the devices are subject to frequent movement after positioning within the human or animal which can dislodge the cathode material. As can be appreciated, any mechanical damage or degradation to the electrode structure could prevent operation of the electrochemical cell and thereby prevent operation of the medical device which, particularly in the case of cardiac pacemakers, may be fatal.

In many electrochemical cells separate binder and carbon compounds are not provided. Rather, high surface area carbon particles are used which not only provide the necessary carbon content for the cathode material but also act as a binder. The high surface area carbon powder is particularly useful within common alkaline batteries using magnesium dioxide, mercuric oxide or silver oxide as active cathode materials. Although effective in alkaline batteries which use a solid electrolyte, high surface area carbon powder is not effective in electrochemical cells employing liquid electrolytes, such as lithium cells, because the binder is dissolved by the liquid electrolyte.

Hence, for electrochemical cells employing a liquid electrolyte, another constraint on the choice of binder materials is that the binder must not degrade in the presence of the electrolyte solution. For electrochemical cells employing a liquid electrolyte, fluoropolymers, either in powder form or in suspensions, are commonly used as the binder compound. An example of a common binder material is a co-polymer, such as Tefzell^{®}, which combines the good bonding properties of otherwise unstable materials with stable materials which alone do not provide adequate bonding. Tefzell^{®}, in particular, combines Teflon^{®} with stable polymers to provide a stable binding material. Teflon^{®}, by itself, is not effective because metallic lithium within a lithium battery cell degrades the Teflon^{®}.

One problem with cathode structures formed using conventional co-polymer binders is that the cathode structures cannot effectively be employed with foil current collectors because the co-polymers do not adequately adhere to flat metal surfaces. To achieve adequate adherence the cathode material usually must be formed into a slurry then spread onto the thin foil. To form a slurry, the binder materials must be dissolvable in a solvent. Polymers and co-polymers such as Teflon^{®} and Tefzell^{®} are not soluble in any solvents and therefore cannot effectively be employed to form a slurry.

Accordingly, use of cathodes employing copolymer binders has been limited to electrochemical cells employing expanded screen current collectors which have rough surfaces formed of a network of interlaced metal strands. The cathode structure is pressed against the expanded screen current collector such that the cathode material becomes intermeshed with the strands of the expanded screen.

Although electrochemical cells employing co-polymer binder materials in combination with expanded screen current collectors have been somewhat successful, many disadvantages remain. One significant disadvantage is that the expanded screen current collectors are more expensive to fabricate than simple foil current collectors. Typically, titanium, 446-stainless steel or other expensive metals are employed. Not only are such metals more expensive, but such metals are quite rigid and the resulting electrode structures therefore cannot easily be formed into desired configurations such as spiral wound configurations or the like. Indeed, when an electrode structure formed of one of such metals is wound into a spiral configuration for mounting within a cylindrical cell housing, damage to the electrode structure often occurs requiring that the electrode structure be discarded. Softer metals which can more effectively be bent into a spiral configuration do not typically have sufficient rigidity to properly hold the cathode material. Moreover, expanded screen current collectors, particularly ones made of soft metals, have considerably greater width than thin foil collectors and thereby consume valuable space within the electrochemical cell, which is a significant problem within electrochemical cells for use in implantable medical devices wherein the size of the cell must be kept to a minimum.

It would be desirable to provide improved binder materials which avoid or overcome the disadvantages described above and it is to that end that certain aspects of the invention are drawn.

Within electrochemical cells employing polycarbon monoflouride the choice of current collector material is particularly important. The current collector material must have electrical characteristics sufficient to achieve adequate current collection. The current collector material must also have certain mechanical characteristics to allow for proper formation of the electrochemical cell. For example, within button cells, such as those commonly employed within watches, the base portion of the button cell is typically employed as a current collector. Accordingly, the material chosen for the current collector must be sufficiently sturdy to resist bending or deformation which could damage the cell. Moreover, button and cylindrical cells include a crimped gasket around the perimeter of the cell. Hence, the current collector material must be sufficiently malleable to allow for formation of the gasket seal while also being sufficiently rigid to prevent subsequent damage to the seal which could result in either a loss of internal electrochemical cell materials or a short circuit between the collector base of the cell and the anode of the cell. The current collector material most commonly employed in button and cylindrical cells is "446-stainless steel", also known under the trade name Shomac.

Conventional stainless steel is not employed as a current collector in electrochemical cells having polycarbon monoflouride. Conventional stainless steel includes a considerable percentage of nickel. The polycarbon monoflouride reacts with the nickel causing an erosion of the stainless steel and a loss of active cathode material. 446-stainless steel, however, does not include any nickel but instead includes chromium and molybdenum and hence resists erosion. 446-stainless steel can be quite expensive and the need to employ 446-stainless steel within electrochemical cells therefore increases the overall cost of the cells. Accordingly, it would be desirable to provide an improved polycarbon monoflouride electrochemical cell which can employ conventional stainless steel rather than 446-stainless steel.

Another current collector material commonly employed is titanium. Titanium has good electrical characteristics for collecting current. However, titanium can be fairly expensive, thereby increasing the overall cost of the electrochemical cell. Moreover, titanium is not adequately annealable. Hence, for certain electrochemical cell configurations, titanium cannot easily be employed.

Accordingly, it would be desirable to provide an improved current collector material for use in electrochemical cells employing polycarbon monoflouride as an active cathode material and certain aspects of the invention are drawn to this end as well.

Within electro-chemical cells, a lithium metal foil anode may be provided in combination with a current collector having a porous carbon cathode material coated thereon. As noted, the anode and cathode are mounted to opposing side surfaces of a polymeric separator. The resulting electrode structure is mounted within a housing which is at least partially filled with a liquid electrolyte such as thionyl chloride. To provide maximum efficiency it is preferred that the electrode structure fill a substantial position of the entire internal volume of the housing, as any remaining space does not increase the current or voltage capacity of the cell but merely represents wasted space. Such is a particular problem for electrochemical cells for use in implantable devices wherein the amount of available space is at a premium.

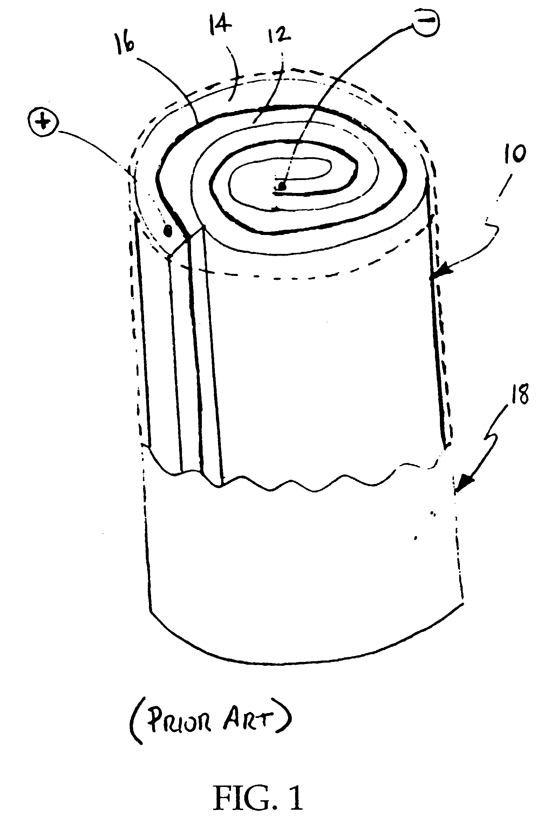

An example of a spiral wound electrode structure is illustrated in FIG. 1. The spiral electrode structure 10 includes anode and cathode portions 12 and 14 separated by a polymeric separator 16. FIG. 1 also illustrates appropriate positive and negative electrical contacts to the anode and cathode portions. A cylindrical button housing 18 is also illustrated in FIG. 1.

By substantially matching the overall shape of the electrode structure 10 with the interior cylindrical shape of the housing 18, the space within the housing is efficiently used and little or no excess space remains. (It should be noted that, within the illustration of FIG. 1, an electrode structure having only a few windings is illustrated. As a result, the amount of empty space remaining within the cell housing is exaggerated within FIG. 1. In actual cylindrical cells, little or no space remains between the interior side wall of the housing and the electrode structure.)

Another housing arrangement employed for electrochemical cells is a rectangular arrangement. Within rectangular cells, a problem occurs in efficiently packing the electrode cell within the housing. If a circular spiral wound electrode structure is employed, a considerable amount of space remains empty within corners of the rectangular cell. Accordingly, various alternative electrode structures have been developed to allow a more efficient packing of the electrode structure into the rectangular housing.

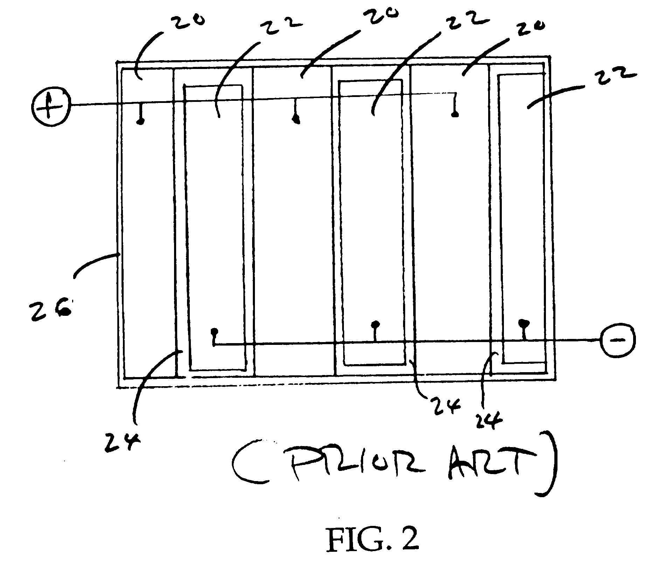

One such configuration, illustrated in FIG. 2, employs a set of parallel plate anode and cathode electrodes 20 and 22 mounted side-by-side within a rectangular housing 26 with each pair of electrodes separated from each other by a polymeric separator 24. Each individual parallel plate structure preferably has a length equal to the interior dimensions of a rectangular housing 26. The rectangular volume within the housing 26 is completely filled. However, by providing a set of separate anodes and cathodes, separate electrical contacts are required for each set. (The electrical contacts are shown schematically in FIG. 2.) For electrochemical cells for use in implantable devices wherein the overall size of the cell must be quite small, the provision of parallel plates, each with respective electrical connections, is difficult and expensive to achieve and, because of the many electrical contacts, the cell may not be as reliable as desired.

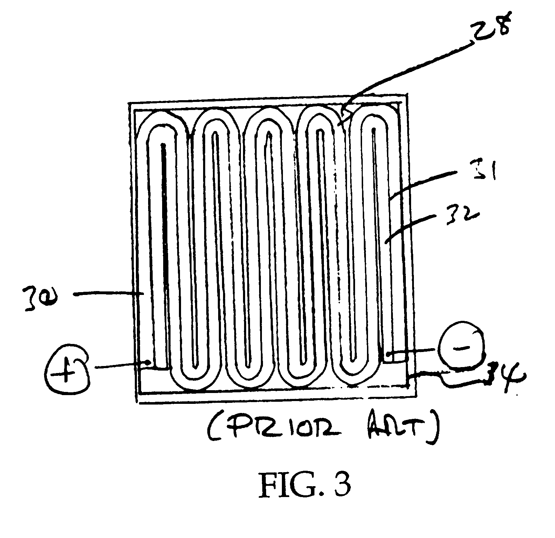

It is generally preferred to provide a single continuous electrode structure, such as employed in the cylindrical cells discussed above. One conventional arrangement for mounting a continuous electrode structure within a rectangular cell is illustrated in FIG. 3. Within the cell of FIG. 3, a single continuous electrode structure 28 having an anode 30 and a cathode 32 is bent into a zig-zag configuration with numerous hairpin bends. The electrode structure 28 is mounted within a rectangular housing 34. Positive and negative electrical contacts (shown schematically within FIG. 3) are provided only at opposing ends of the structure. Although such a configuration requires only a limited number of electrical contacts, the bending of the electrode structure into a zig-zag shape can result in damage to the electrode structure. In particular, tearing may occur in the vicinity of the hairpin bends resulting in loss of active material and in possible internal short circuits through the polymeric separator between the anode and the cathode.

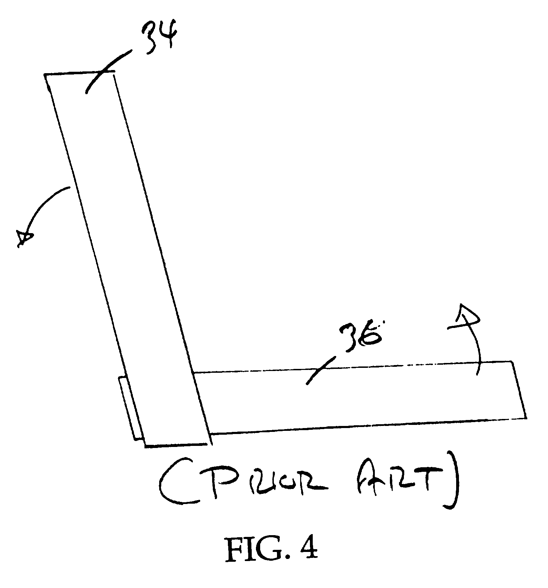

FIG. 4 illustrates another conventional method for fabricating an electrode structure for mounting within a rectangular housing. In the arrangement of FIG. 4, a long thin rectangular anode structure 37 is positioned perpendicular to a long thin rectangular cathode structure 36. Thereafter, the anode and cathode structures are folded, along the arrows shown, to yield a substantially rectangular structure, which is thereafter inserted into a rectangular housing. (A polymeric separator, not shown, is preferably positioned between the anode and cathode structures prior to folding of the structure such that the resulting electrode structure includes a polymeric separator between each adjacent anode and cathode segment.) However, the resulting structure suffers from many of the same disadvantages with the structure of FIG. 3. In particular, the presence of sharp hairpin bends within the electrode structure can result in internal short circuits and in regions of poor electrical contact.

It would be desirable to provide an improved electrode arrangement for use in rectangular electrochemical cells, particularly small cells for use in implantable devices, which avoids the disadvantages of prior art arrangements described above. Aspects of the present invention are drawn to such improved arrangements and to methods for fabricating same.

It is desirable for a current collector to be configured to allow for a large amount of cathode material to be formed thereon while also achieving adequate electrical contact to all portions of the cathode material.

One commonly employed current collector configuration is an expanded screen wherein a flat, thin sheet of electrically conducting material, such as stainless steel, titanium or aluminum, is partially cut in numerous places along a direction extending between opposing side edges. Thereafter, the current collector material is pulled or stretched along a direction perpendicular to the cutting direction to expand the collector material and thereby yield a structure having a substantial surface area for receiving cathode material.

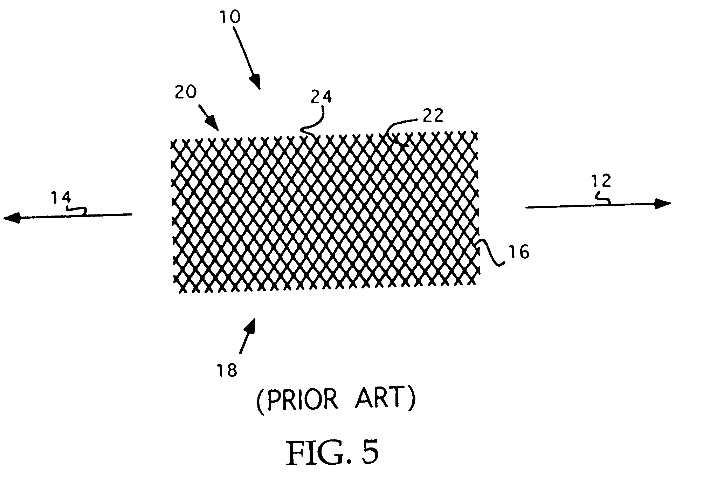

FIG. 5 illustrates a conventional expanded screen current collector 10. Arrows 12 and 14 indicate the direction along which the material is pulled or stretched to achieve the expanded configuration as illustrated. The current collector 10 includes numerous individual strings 16 extending generally from a bottom side edge 18 to a top side edge 20. Numerous openings 22 exist between adjacent strings 16. The openings 22 result from the expansion of the partial cuts formed in the current collector material. As can be seen from FIG. 5, the strings 16 project outwardly along the side edges 18 and 20 yielding sharp tines or projections 24. The sharp tines 24 often become bent during handling of the current collector.

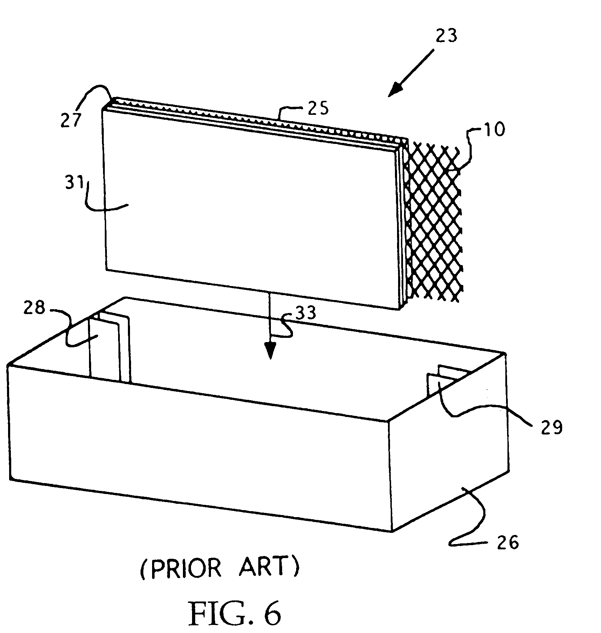

An electrode structure employing the expanded screen current collector is illustrated in FIG. 6. The electrode structure 23 is formed by applying an appropriate amount of a cathode material 25 onto the expanded screen current collector 10 which is then mounted to one side of a polymeric separator 27. An anode 31 is mounted to an opposing side surface of the separator 27. Within FIG. 2, for clarity in illustrating the current collector 10, a portion of the electrode structure 23 is shown without the anode, separator and cathode materials. In actual electrodes, the current collector is completely covered by the cathode material and the anode and separator extend along an entire length of the current collector.

The sharp tines 24 of the current collector 10, if bent, can damage the polymeric separator 27 and can further cause a short circuit directly between the anode 31 and the cathode 25, thereby degrading and perhaps completely preventing performance of a resulting electrochemical cell.

FIG. 6 also illustrates an electrochemical cell housing 26 into which the electrode structure 23 is inserted. An arrow 33 illustrates a direction of insertion. During insertion, end portions of the electrode structure 23 are mounted within slots 28 and 29. (Only one exemplary set of slots are illustrated. An actual electrochemical cell will typically have many slots mounted in parallel.)

It has been found that damage caused by the sharp tines 24 is particularly severe within the vicinity of the slots 28 and 29.

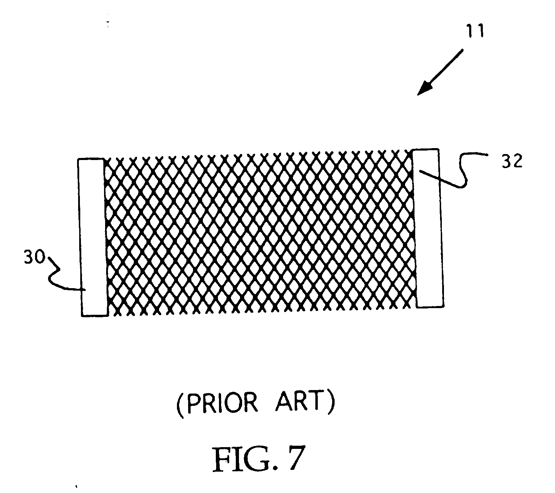

To partially minimize the risk of damage, some expanded screen current collectors are formed as shown in FIG. 7 wherein only a central portion of an expanded screen current collector 11 is cut and expanded. Opposing end portions 30 and 32 are left unexpanded. The overall length of the expanded screen current collector, and of end portions 30 and 32, is selected to match the distance between opposing slots within a housing such as the one shown in FIG. 7. When the electrode structure is mounted within the housing, the end portions 30 and 32 are thereby properly received within the slots.

Hence, those portions of the expanded screen current collector which are mounted within the slots of the cell housing do not include any sharp tines and potential damage to the electrode structure in the vicinity of the slots is avoided. However, damage may still occur as a result of sharp tines formed along the expanded portions of the current collector. Moreover, because of the presence of the unexpanded end portions of the current collector, the resulting electrode structure can only be effectively employed within an electrochemical cell having a slot spacing matching the length of the electrode structure. Such a current collector can not be formed from an arbitrarily sized sheet, then cut to fit any of a number of predetermined slot spacings, as can be done for the expanded current collectors of the type illustrated in FIG. 5. Rather, once the expanded screen current collector of FIG. 7 is formed, it cannot be significantly cut in length to fit an arbitrary slot spacing but is useful only in an electrochemical cell having a slot spacing substantially matching the tin-cut current collector length.

The foregoing problems which result from the presence of the sharp tines is particularly severe for electrochemical cells requiring very thin expanded screen current collectors. For thicker electrodes, such as electrodes having a thickness greater than 0.035 inches, any resulting sharp tines are usually sufficiently rigid to resist bending. Subsequent damage, if any, to the adjacent polymeric separator is thereby minimal. However, for certain electrochemical cells, an expanded screen current collector having such a thickness does not allow for a cell to be formed having an adequate geometrical surface area of current collector material. Such is a particular problem in small electrochemical cells for use in implantable devices which must be small in size. To provide a greater geometrical surface area and thereby improve the overall performance of such cells, it is desirable to employ a current collector having a thickness less than 0.035 inches, and in particular less than 0.025 inches. By employing thinner current collectors, a greater geometrical surface area is achieved without requiring a corresponding increase in the overall volume of the current collector.

However, for current collectors having a width less than 0.025 inches, particularly less than 0.020 inches, the aforementioned damage caused by the presence of the sharp tines is particularly problematic. With such a width, the resulting tines are considerably less rigid than in thicker current collectors, thus allowing the tines to be accidentally bent during fabrication or mounting in a manner which may damage the polymeric separator and perhaps cause a short circuit to the anode. It has been found that such problems are particularly severe when employing current collectors formed of stainless steel or titanium in part because such materials cannot be sufficiently annealed to conform to shape changes during assembly. The fabrication of cells incorporating thin current collectors formed of aluminum has been somewhat more successful, yet the overall performance of the resulting cells is generally unacceptable because aluminum does not provide the degree of current collection that can be achieved using titanium or stainless steel.

Many of the aforementioned problems occur for woven current collectors as well as for expanded screen current collectors.

It would be desirable to provide an improved method for fabricating expanded screen current collectors and woven current collectors for use in electrochemical cells, particularly those employed in implantable devices, wherein the aforementioned problems are substantially avoided. In particular, it would be desirable to provide a method for fabricating a current collector having a thickness less than 0.025 inches, yet formed of titanium or stainless steel, in a manner such that the current collector can be reliably employed within an electrochemical cell.

In accordance with a first aspect of the invention improved binder compounds are provided for use in binding active cathode compounds to form an electrode structure suitable for use within lithium electrochemical cells employing non-aqueous electrolytes, particularly cells employing thin foil current collectors.

In an exemplary embodiment, a pair of binder materials are employed with the binder materials chosen to react with each other during processing to form an improved binder compound. In particular, acrylonitril resin and polyethylene oxide binder materials are dissolved in acetonitrile solvent to form a homogenous solution. The binder solution is mixed with carbon and an active cathode compound such as manganese dioxide, polycarbon monoflouride, cobalt oxide or nickel oxide to produce a slurry for spreading onto a metal foil current collector. It is believed that the pair of binder materials react with the carbon to achieve improved bonding. The slurry is spread onto the metal foil before a substantial portion of solvents within the slurry evaporate. The solvents are then allowed to evaporate while the slurry is in contact with the metal foil yielding improved mechanical and electrical coupling with the metal foil.

Alternatively, the slurry may be processed for use with an expanded screen current collector. The cathode material is heated to evaporate the solvents. The slurry is then spread onto a metal surface and allowed to dry, yielding a thin flexible film. The flexible film is then pressed onto the expanded screen current collector. The flexible film may alternatively be used with a metal foil current collector having a fairly rough surface. This is achieved by roughening the flexible film, perhaps with sandpaper, then pressing the film against the metal foil.

A resulting cathode structure, employing either a metal foil current collector or an expanded screen current collector, is employed with a polymeric separator, lithium anode and non-aqueous electrolyte solution to form an electrochemical cell for use within implantable medical devices.

By forming a cathode material as described, electrode structures may be effectively prepared which employ either thin foil current collector or expanded screen current collectors. The cathode material exhibits excellent electrical contact between the active cathode compound and the current collector yet resists degradation from the non-aqueous electrolyte and which further achieves excellent mechanical coupling with the current collector for preventing any mechanical damage.

In accordance with a second aspect of the invention, an improved electrochemical cell is provided which includes polycarbon monoflouride in combination with a current collector formed of aluminum.

In an exemplary embodiment, the electrochemical cell is a cylindrical cell including a wound electrode structure having the polycarbon monoflouride coating a thin foil aluminum sheet. The electrode structure also includes a lithium anode separated from the polycarbon monoflouride by a polymeric separator. Alternatively, the anode may be formed of sodium, calcium or alloys thereof. The electrochemical cell also includes a non-aqueous electrolyte such as lithium perchlorate dissolved in propylene carbonate. In an alternative embodiment, the electrode structure employing the aluminum current collector with the polycarbon monoflouride active cathode material is configured as a rectangular plate and mounted within a rectangular housing along with other similar rectangular electrode plates.

In either embodiment, a conventional stainless steel housing may be employed. The aluminum foil is mounted between the stainless steel and the polycarbon monoflouride such that the polycarbon monoflouride does not contact the stainless steel. By ensuring that the polycarbon monoflouride does not contact the stainless steel, conventional stainless steel may be employed rather than 446-stainless steel. Hence, the overall cost of the electrochemical cell is greatly reduced. Moreover, by employing aluminum as a current collector, rather than titanium or other conventional polycarbon monoflouride cell current collectors, the electrode structure may be formed more easily, particularly because aluminum is more easily annealed than titanium.

In accordance with a third aspect of the invention, a continuous electrode structure is wound, around a removable mandrel, into a generally oval shape for insertion into the rectangular housing. By winding the continuous electrode structure into an oval configuration, many of the advantages of conventional circular spiral wound configurations are achieved, while also yielding a structure which adequately fills the interior volume of the rectangular housing. By avoiding the need to provide sharp hairpin bends in the electrode structure, the disadvantages noted above, such as those involving internal short circuits, are substantially avoided.

In an exemplary embodiment, the continuous electrode structure includes a metal anode having lithium, sodium, calcium or the like, and a solid cathode having polycarbonmonoflouride coated on a current collector. The anode and cathode materials are mounted to opposing side surfaces of a polymeric separator. The electrode structure is wound around a thin flat mandrel having a length and width selected such that, upon completion of the winding and upon removal of the mandrel, the resulting oval spiral electrode structure assumes the length and width of the interior volume of the rectangular housing. One electrical contact is provided to the anode near the interior of the spiral wound structure and a second electrical contact is provided to the cathode at the outermost edge of electrode structure. A leaf spring is positioned between an interior side wall of the rectangular housing and an outermost end of the electrode structure for ensuring that the spiral wound structure, particularly the exterior portion thereof, remains tightly compressed. The housing is filled with an appropriate amount of a liquid electrolyte solution, such as lithium hexaflouroarsenate dissolved in tetrahydrofurane, then tightly sealed.

By employing an oval spiral-wound electrode structure, only a small portion of the interior volume of the cell remains empty, yet the disadvantages of prior art rectangular electrode structures described above are avoided. Although the interior volume is not completely filled with the electrode structure, it has been found that a sufficient portion is filled and the presence of any remaining unfilled volume is offset by the advantages gained by employing a spiral wound structure.

In accordance with a fourth aspect of the invention, an improvement is provided for current collectors for use within electrochemical cells of implantable devices. The improvement comprises coining opposing side edges of the current collector inwardly. The invention may be advantageously applied to expanded screen current collectors and to woven current collectors, as well as to any other current collectors having sharp tines extending from opposing side edges.

In an exemplary embodiment, the current collector having the coined side edges is an expanded screen current collector used within an electrode structure having a flat sheet anode separated from the expanded screen current collector by a polymeric separator material. The expanded screen current collector is formed from a sheet of stainless steel or titanium having a width less than 0.025 inches. The current collector is coated with polycarbonmonoflouride. The flat sheet anode is a thin metal foil coated with lithium.

The expanded screen current collector having coined edges may be formed by first providing a sheet of metal, such as stainless steel or titanium, having a width somewhat greater than a desired width for use in an electrochemical cell. The sheet of metal is partially cut, in accordance with conventional techniques, in numerous places along a direction between opposing side edges, then expanded by pulling outwardly on opposing ends of the sheet. Thereafter, the opposing side edges are bent or coined inwardly by an amount sufficient to assure that the resulting width of the current collector matches the desired width for use in the electrochemical cell. Finally, the length of the current collector is cut to match the length available between slots within a desired cell housing.

By employing a current collector having coined opposing side edges, damage which may result from sharp tines along those edges is substantially avoided. In particular, damage that would otherwise occur to the polymeric separator, perhaps resulting in a short-circuit to the anode material, is avoided. The current collector can be formed to an arbitrary length, then cut to fit the slot spacings of any particular electrochemical cell housing.

As such, the general objectives set forth above are achieved.

The invention may be carried into practice in various ways and some embodiments will now be described by way of example with reference to the accompanying drawings, in which:

FIG. 1 is a top view, partially in schematic form, of a portion of an electrochemical cylindrical cell employing a spiral wound cylindrical electrode structure configured in accordance with the prior art.

FIG. 2 is a top view, partially in schematic form, of a portion of a rectangular electrochemical cell having sets of parallel-mounted electrode plates configured in accordance with the prior art.

FIG. 3 is a top view, partially in schematic form, of a portion of a rectangular electrochemical cell having an electrode structure folded in a zig-zag pattern configured in accordance with prior art.

FIG. 4 is a top view of electrode and anode components of an electrode structure illustrating a method by which the components are folded, one upon the other, to yield a rectangular electrode structure as provided in the prior art.

FIG. 5 is a side elevational side view of an expanded screen current collector formed in accordance with the prior art.

FIG. 6 is a perspective view of an electrode structure employing an expanded screen current collector and a portion of an electrochemical cell housing, particularly illustrating the location of slots within the housing into which the electrode structure is mounted.

FIG. 7 is a side elevational view of an expanded screen current collector having non-expanded ends.

FIG. 8 illustrates a method for fabricating a cathode structure for use within an electrochemical cell of an implantable medical device.

FIG. 9 is a perspective view of a portion of an electrode structure incorporating a cathode structure fabricated in accordance with the method of FIG. 8 employing a metal foil current collector.

FIG. 10 is a perspective view, partially in cutaway, of another electrode structure also configured in accordance with the method of FIG. 8, but employing an expanded screen current collector.

FIG. 11 is a perspective view of a cylindrical electrochemical cell employing a spiral wound electrode structure formed from the electrode structure illustrated in FIG. 2.

FIG. 12 is a perspective view of a portion of an electrode structure for use in an electrochemical cell with the electrode structure including a polycarbon monoflouride active carbon layer formed on a thin aluminum foil current collector.

FIG. 13 is a perspective view of a cylindrical electrochemical cell having a wound electrode structure of the type illustrated in FIG. 12.

FIG. 14 is a perspective view of a rectangular electrochemical cell having parallel plate electrode structures of the type illustrated in FIG. 12.

FIG. 15 is a side cross-sectional view of a button cell having a polycarbon monoflouride cathode and an aluminum current collector.

FIG. 16 is a perspective view of an oval spiral wound electrode structure configured in accordance with principles of the invention.

FIG. 17 is a top view of a rectangular electrochemical cell having the oval spiral wound electrode structure of FIG. 17.

FIG. 18 is a side elevational view of an expanded screen current collector configured in accordance with the invention.

FIG. 19 is a perspective view of a portion of an electrode structure incorporating the expanded screen current collector of FIG. 18.

The invention relates to improved electrochemical cells and components thereof for providing power within an implantable device and to methods for fabricating the cells and components of the cells. The invention will be described primarily with reference to a lithium battery cell employing a non-aqueous electrolyte but principles of the invention are applicable to other electrochemical cells as well.

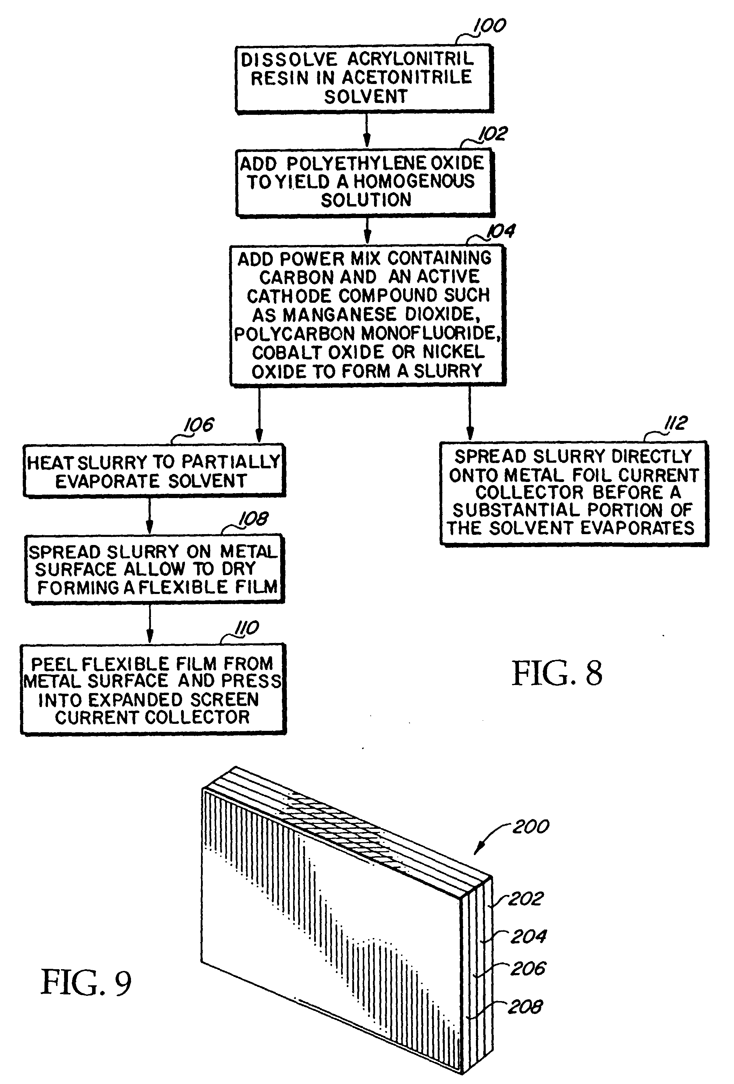

FIG. 8 illustrates a method for fabricating a cathode structure. Initially, at 100, acrylonitril resin, sold under the trade name Acryloid resin, is dissolved in acetonitrile solvent. Polyethylene oxide powder is added to yield a homogenous solution, at 102. The polyethylene oxide powder is also soluble in the acetonitrile solvent. Next, at 104, a powder mix containing carbon and an active cathode compound such as manganese dioxide, polycarbon monoflouride, cobalt oxide or nickel oxide is added to form a slurry.

If a cathode material for use with an expanded screen current collector is desired, the slurry is placed on a gentle heating plate to evaporate most of the solvent and to assume a spreadable consistency, at 106. At 108, the slurry is spread on to a metal surface such as a smooth aluminum, titanium, nickel or stainless steel surface. The slurry dries in minutes leaving a solid flexible film which is peeled from the metal surface, then pressed onto the expanded screen current collector, at 110. The current collector may also be formed from various metals such as aluminum, titanium, nickel or stainless steel. Other metals may also be employed for use in steps 108 or 110 so long as the metals do not react with any of the compounds of the cathode material in a manner which might degrade the cathode material. If polycarbon monoflouride is employed within the cathode material, then nickel and nickel-containing metals such as conventional stainless steel should not be employed. If desired, 446-stainless steel may be employed, as such does not include any nickel.

If an electrode structure having a foil current collector is desired, then instead of performing method steps 106, 108 and 110 of FIG. 8, method step 112 is performed. More specifically, the slurry obtained at step 104 is spread directly on to the foil current collector without heating the slurry to evaporate the solvents. As such, the solvents evaporate after the slurry has been spread onto the foil current collector resulting in good electrical contact between the active cathode material and the current collector. As before, care should be taken in selecting the active cathode material and the current collector metal such that no undesirable reactions occur.

If aluminum, or another relatively rough metal, is employed as a metal foil current collector, the cathode material may be formed in the manner described in steps 106 and 108 to form a flexible sheet. The flexible sheet is then roughened, perhaps by using sandpaper, then positioned against the current collector. The metal may also be further roughened by using sandpaper prior to mounting the flexible film. The combination of the relatively rough metal surface and the roughened flexible cathode material ensures adequate mechanical and electrical coupling for most purposes. However, the step of spreading the slurry directly on the rough metal before evaporation of the solvents, as described above, may alternatively be employed.

The use of the two binding materials acrylonitril resin and poly ethylene oxide, yields a cathode material which has both excellent electrical characteristics and mechanical characteristics. It is believed that the two compounds react during processing to achieve an enhanced binding effect not available separately. Indeed, it has been found that the use of polyethylene oxide alone results in a cathode material which is too brittle to be effectively employed, particularly within electrode structures for use in cylindrical cells where the electrode structure is wound into a spiral. It has further been found that the use of acrylonitril resin alone results in a cathode material which is too "gluey" and cannot be as effectively used, particularly for expanded screen current collectors. Furthermore, because of the gluey texture of the cathode structure, the cathode material tends not to make as good a contact with the current collector as needed for a high pulse current of the cell. The combination of the two compounds yields a cathode material having the desired mechanical and electrical characteristics.

The cathode structures fabricated in accordance with the steps of FIG. 8 may be employed as a component of an electrode structure having a lithium anode and a polymeric separator.

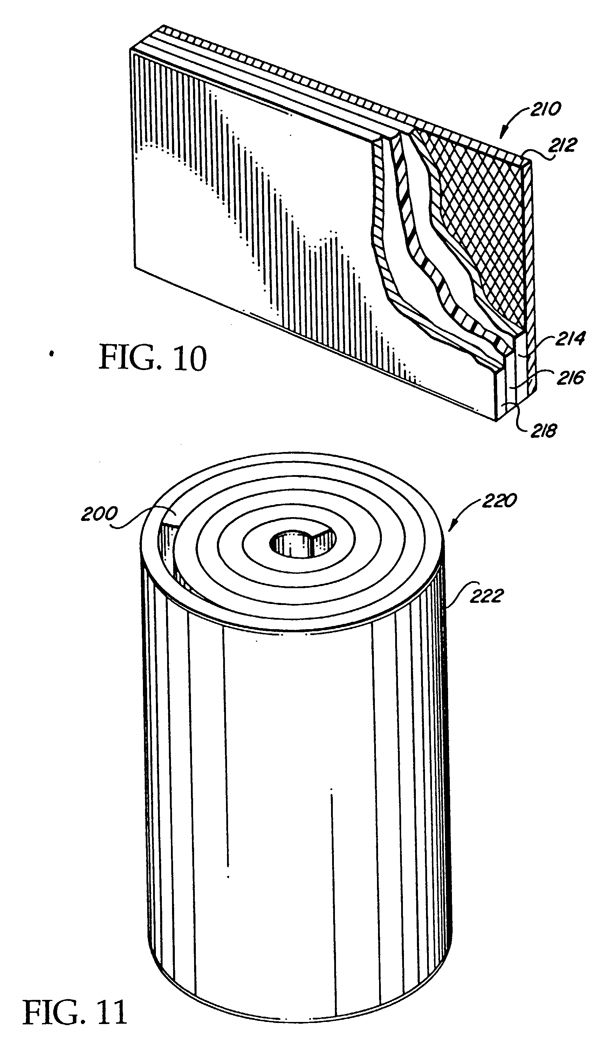

An electrode structure of the type described employing a metal foil current collector is illustrated in FIG. 9. More specifically, FIG. 9 illustrates a portion of an electrode structure 200 having a thin foil current collector 202, a cathode material 204 fabricated as described, a polymeric separator 206 and a lithium-based anode 208. The anode 208 is mounted to one side surface of the polymeric separator 206. The cathode material 204 is mounted to the other side surface of the polymeric separator 206 with the current collector 202 facing away from the polymeric separator.

FIG. 10 illustrates an electrode structure 210 employing an expanded screen current collector. The electrode structure 210 includes an expanded screen current collector 212 mounted to a flexible sheet cathode material 214 fabricated as described. The electrode structure 210 also includes a polymeric separator 216 and a lithium-based anode 218. As with the structure of FIG. 10, the anode 218 is mounted to one side surface of the polymeric separator 216 and the cathode material 214 is mounted to the other side surface. The current collector 212 faces away from the polymeric separator.

FIG. 11 illustrates an electrochemical cell 220 employing the electrode structure 200 illustrated in FIG. 2. The electrode structure 200 is spiral wound and mounted within a housing 222. Appropriate electrical contacts, not shown, are provided to the anode and cathodes of the electrode structure 200. The electrical contacts are connected to appropriate terminals, also not shown, on the exterior of the cell for interconnecting with electrical components of an implantable medical device. The cell housing 222 is flushed with a non-aqueous electrolyte and sealed prior to use.

In an exemplary implementation, the method of FIG. 8 was employed as follows. Six grams of acrylonitril resin (in a forty per cent solution) were dissolved in 300cc's of the acetonitrile solvent. Six grams of polyethylene oxide powder were added to yield the homogenous solution. One hundred grams of powder mix containing carbon and an active cathode compound were added to the solution to yield a slurry.

The slurry was then spread to dry on the surface of a foil current collector. The resulting cathode structure was mounted to one side of a polypropylene separator and a lithium anode was mounted to the other side. The resulting electrode structure had the dimensions of 17 X 1.4 X 0.007". The electrode structure was wound into a spiral configuration and mounted within a cylindrical cell housing filled with a non-aqueous electrolyte. The cell was discharged to the constant load of 100 ohms. A discharge capacity was measured up to a cutoff voltage of 1.5 volts. The discharge capacity observed corresponded to 90% of a theoretical capacity predicted for the electrode, verifying the effectiveness of the overall electrochemical cell and the cathode material in particular.

What has been described thus far are improved electrochemical cells including cathode structures and methods for making the cathode structures. One aspect of the improved cathode structures is the use of a pair of binder materials which react with carbon during processing of the cathode structure. In the specific exemplary embodiment described herein a combination of polyethylene oxide and acetonitrile resin is employed as the binders. Other combinations of binders may also be employed. In general, any combination of two or more binder materials which react during processing may be utilized. Of course, the two binder compounds must be soluble within the same solvent. In general, it is preferred that the two binder materials each be present in quantities between 2% - 15% of the dry active cathode compound. Generally speaking, anything less than 2% will result in inadequate binding. Anything greater than 15% may result in inadequate electrical characteristics. Although various specific and exemplary compound quantities are described above, alternative quantities may also be employed.

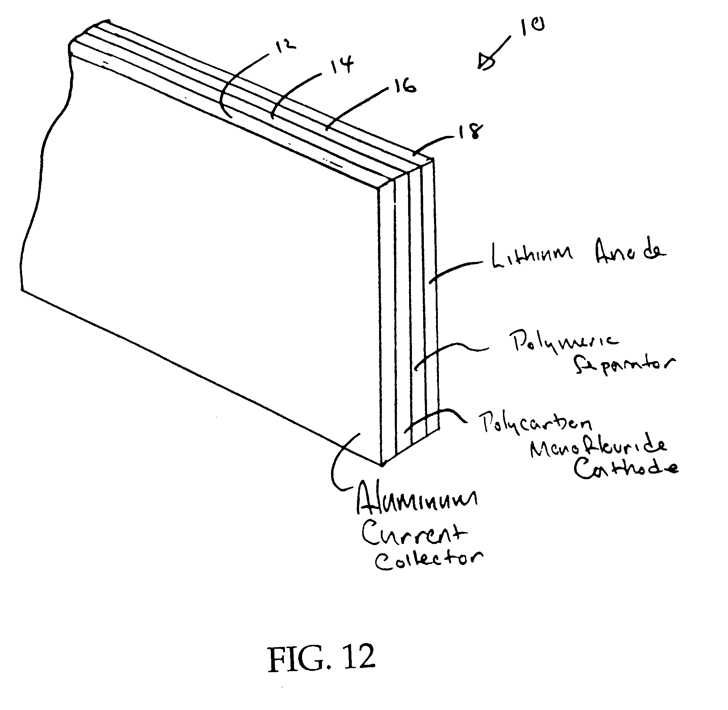

FIG. 12 illustrates a portion of an electrode structure 10 configured in accordance with the invention. The electrode structure 10 includes a thin foil current collector 12 formed of aluminum, an active cathode layer formed of polycarbon monoflouride 14, a polymeric separator 16 and an anode 18. As can be seen from FIG. 12, the polymeric separator 16 separates the active cathode layer 14 from the anode 18. In exemplary embodiments, the anode 18 includes lithium coating a thin metal foil. The polymeric separator 16 may be a thin porous insulator with a high ion permeability such as polyolefin made into non-woven cloth or a microporous polypropylene.

The polycarbon monoflouride cathode layer 14 may be formed of a mixture of polycarbon monoflouride with actylene black and a binder such as polytetraflouroethylene (PTFE). The cathode material may be formed using conventional techniques such as by mixing the polycarbon monoflouride with carbon in a solution of isopropanol and water, mixed into a slurry, then heated to coagulate the PTFE and to precipitate out all solids.

The aluminum layer 12 is preferably formed to a thickness of 1 mil. Aluminum foil of such thickness is available commercially.

By employing aluminum as the current collector, rather than titanium or 446-stainless steel, the resulting electrode structure 10 can be more easily shaped into a desired configuration such as a wound configuration for use in cylindrical electrochemical cells. Moreover, desirable electrical characteristics of aluminum are advantageously employed. Aluminum has excellent stability in contact with the polycarbon monoflouride materials. Also, aluminum provides a highly conductive matrix which effectively reduces the internal impedance of the electrochemical cell. Such is particularly significant for cells configured for high power pulsing discharge. Furthermore, the use of aluminum as the current collector material reduces the overall cost of the electrochemical cell. Additionally, for electrode structures wound into a spiral configuration, the use of the relatively soft aluminum, rather than titanium or 446-stainless steel, allows the electrode structure to be bent more easily during manufacture resulting in fewer damaged electrode structures such structures having short circuits between the anode and the current collector. Accordingly, overall production costs of electrochemical cells are reduced by employing aluminum as the current collector. As will be described in more detail below, electrode structures having aluminum as the current collector may be advantageously employed within cylindrical cells, rectangular cells and button cells. The electrochemical cells described herein primarily employs a thin foil of aluminum as the current collector. However, expanded screen current collectors may also be formed of aluminum.

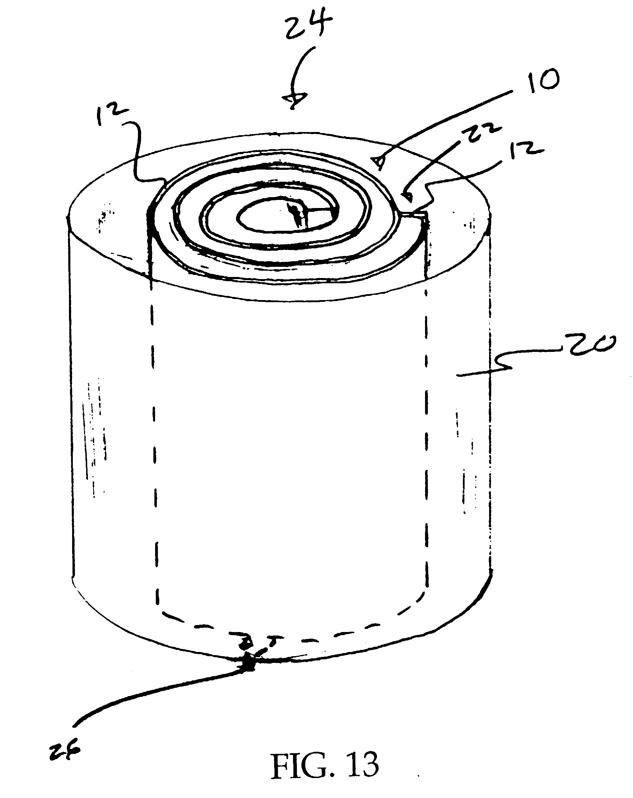

FIG. 13 illustrates the electrode structure 10 of FIG. 12 wound into a cylindrical configuration and mounted within a cylindrical housing 20 formed of stainless steel. Care is taken to ensure that none of the polycarbon monoflouride contacts the stainless steel of the housing 20. As such, a conventional stainless steel of the type employing a fairly large percentage of nickel may be used. Hence, although 446-stainless steel may alternatively be employed, such is not necessary so long as the aluminum is positioned between the housing 20 and the polycarbon monoflouride. In this regard, it may be desirable to enclose end portion 22 of the wound electrode structure with aluminum (as shown) and to further enclose top and bottom ends 24 and 26 of the cylindrical electrode structure as well (not shown). The polycarbon monoflouride cathode material is thereby adequately isolated from the stainless steel housing.

Although not shown, appropriate electrical contacts are provided to the anode and aluminum layers of the wound electrode structure. The electrical contacts are interconnected to terminals exterior to the housing which are in turn connected to electrical circuitry within an implantable medical device (not shown).

Prior to enclosing housing 20, the interior of the housing is filled with a non-aqueous electrolyte such as a mixture of dimethoxyethane (DME) and propylene carbonate. Other suitable electrolytes include LiAsF₆ in gamma-butyrolactone and lithium perchlorate dissolved in propylene carbonate.

A test cell was configured using a lithium perchlorate/propylene carbonate electrolyte. Superior voltage characteristics were observed in the cell despite the selection of the low conductivity lithium perchlorate electrolyte, thus demonstrating that a major part of the overall voltage drop occurs at the current collector/active material interface. As such, a more conductive electrolyte does not necessarily improve the internal impedance of the electrochemical cell. Rather, optimal contact characteristics between aluminum and the active cathode materials have a greater effect on the electrical performance.

Although conventional cathode materials employing polycarbon monoflouride may be employed, in a preferred embodiment the cathode material is formed in accordance with the techniques described above. By forming the cathode in accordance with the method described above, excellent contact is achieved between the aluminum and the polycarbon monoflouride.

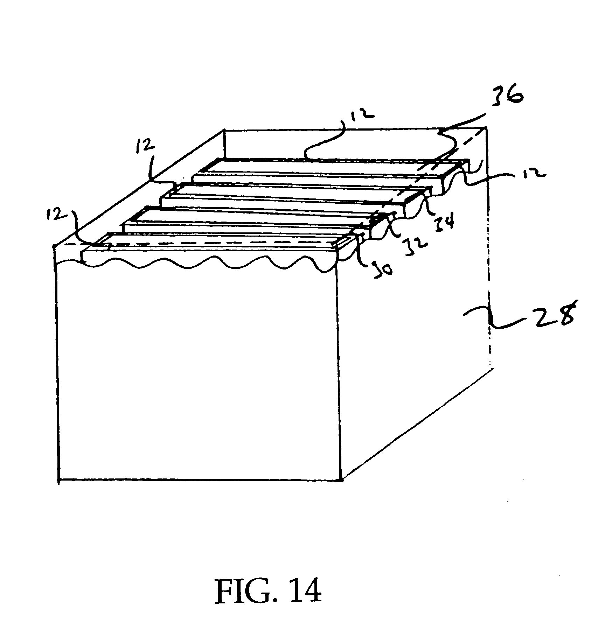

FIG. 14 illustrates an alternative embodiment of the invention wherein electrode structures of the type illustrated in FIG. 12 are mounted as parallel plates within a rectangular housing 28. Within FIG. 14, exemplary electrode structures are denoted 30, 32, 34 and 36. As with the cylindrical cell of FIG. 13, the housing of the rectangular cell of FIG. 14 may be formed of conventional stainless steel with appropriate care taken to isolate the active cathode layers from the stainless steel housing. Appropriate electrical contacts are provided to each of the individual electrode plates. An electrolyte solution is poured into the housing and the housing is sealed. Alternatively, a oval spiral-wound electrode structure may be employed within the rectangular housing. A method for forming such a oval spiral-wound structure is described below.

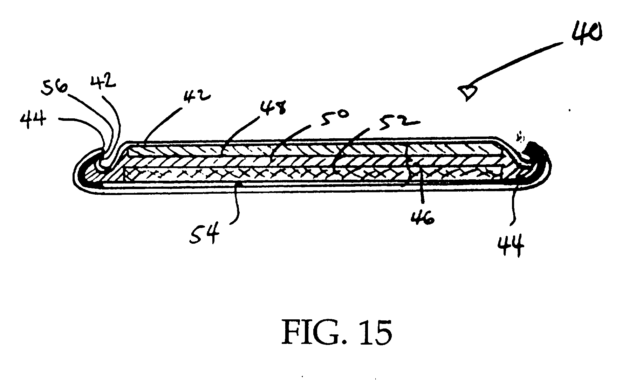

FIG. 15 illustrates another alternative embodiment of the invention wherein an electrode structure employing an aluminum current collector and a polycarbon monoflouride active cathode material is used within a button cell. More specifically, FIG. 15 illustrates a button cell 40 having an anode cap 42 and a base 44. An electrode structure 46 is mounted between the cap 42 and the base 44. The electrode structure 46 includes an anode 48 formed of, for example, lithium coated onto a metal foil. Immediately below the anode 48 is a separator material such as a polymeric separator 50. A layer of polycarbon monoflouride 52 and a layer of aluminum 54 are positioned between the separator 50 and the base 44. As can be seen, the aluminum layer 52 isolates the polycarbon monoflouride layer 50 from the collector base 44 thereby allowing the collector base 44 to be formed of conventional stainless steel, rather than 446-stainless steel.

To ensure electrical isolation between the anode cap 42 and the collector base 44, a gasket 56 is formed around the perimeter of the cell 40.

In each of the foregoing embodiments, a thin aluminum foil-type collector is employed. In alternative embodiments, an expanded screen current collector may be employed. Expanded screen current collectors often include sharp spikes formed along top and bottom edges thereof which can cause short circuits between the current collector and the anode of the electrode structure. The presence of such spikes may be eliminated by employing a fabrication method described below.

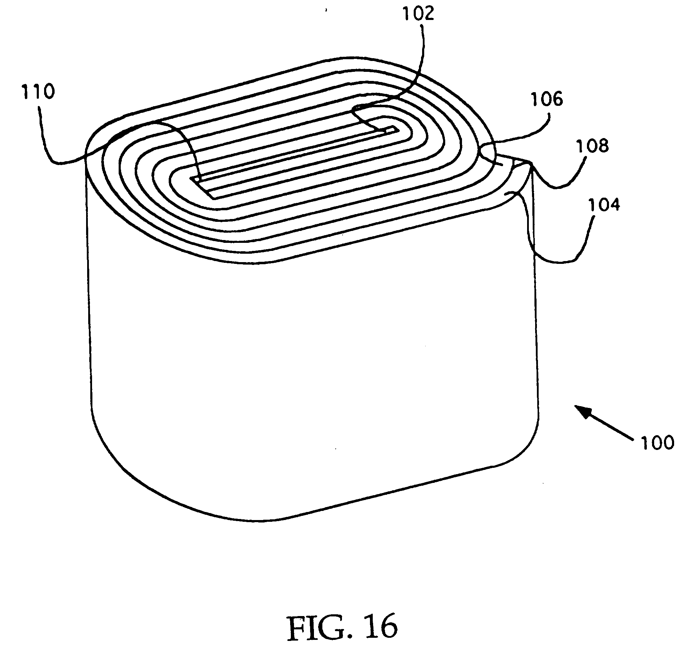

FIG. 16 illustrates an electrode structure 100 wound around a mandrel 102 into a generally oval spiral configuration. The electrode structure 100 includes an anode 104, a cathode 106, and a polymeric separator 108. The electrode structure 100 is formed from a single rectangular flat electrode structure by winding the flat electrode structure around the mandrel 102. This is achieved by affixing or holding an interior end 110 of the electrode structure 100 to a side surface of the mandrel 102, then wrapping the electrode structure around the mandrel to yield the configuration as shown. Such may be performed manually or by using automated equipment, such as equipment commonly employed for winding circular spiral electrodes, modified as needed to achieve winding around the mandrel. Preferably, the winding of the electrode structure 100 is performed to achieve as tight a spiral structure as possible, without risking damage to the structure during wrapping.

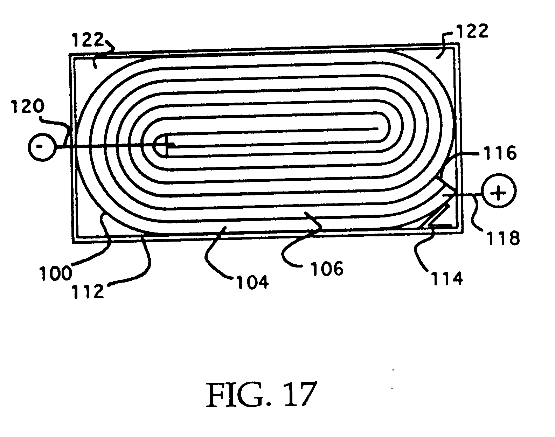

The mandrel 102 is removed from within the spiral wound electrode structure 100, then the electrode structure 100 is mounted or placed within a rectangular housing 112 of an electrochemical cell as shown in FIG. 17. A leaf spring 114 is positioned between an interior side wall of the housing 112 and a free end 116 of the electrode structure 100. An electrical contact 118 is connected to the anode 104 of the electrode structure 100 near the free end 116. A second electrical connection 120 is provided to the cathode of the electrode structure 100 near the interior end 110. The leaf spring 114 and the two electrical contacts 118 and 120 may be configured and mounted in the same manner as employed for the spiral wound cylindrical cell electrodes and, as such, will not be described in further detail herein.

A liquid electrolyte 122 is poured into housing 112, then a top (not shown) is mounted onto the housing 112 and sealed or permanently affixed thereto. The final rectangular electrochemical cell and any necessary supporting electrical devices or connections is mounted within an implantable device, such as a pacemaker, for ultimate implantation into a human or animal.

Although a wide variety of electrochemical cell components may be employed, in one exemplary embodiment, the anode 104 is formed from a thin sheet of metal coated with lithium, sodium, calcium or alloys thereof. The cathode 106 is formed of a current collector, such as an expanded screen current collector, coated with polycarbonmonoflouride. The separator 108 is formed of a polymeric separator material. The liquid electrolyte material is a non-aqueous electrolyte of lithium hexaflouroarsenate dissolved in tetrahydrofurane.

As noted above, the size of the original electrode material is chosen before winding based upon the size of the mandrel 102 and upon the interior length and width of the housing 112 to yield a resulting oval wound electrode structure which fits snugly within the housing 112 without any substantial space between the electrode structure and the interior side walls of the housing, other than in the corners of the housing.

In an alternative embodiment, rather than removing the mandrel prior to insertion of the electrode structure into the cell housing, the mandrel may simply be left within the center of the electrode structure and inserted along with the electrode structure into the housing. As can be appreciated, the overall length of the electrode structure, prior to winding, should be chosen to compensate for the presence of the mandrel such that, after winding, the electrode structure and mandrel fit snugly within the cell housing.

In a further alternative embodiment, the mandrel can be cylindrical. After the electrode material is wound, the mandrel is removed and the electrode material is compressed, thereby yielding an oval shape. With appropriate selection of the size of the original electrode material and mandrel diameter, the wound electrode will fit the housing as well as the above embodiment.

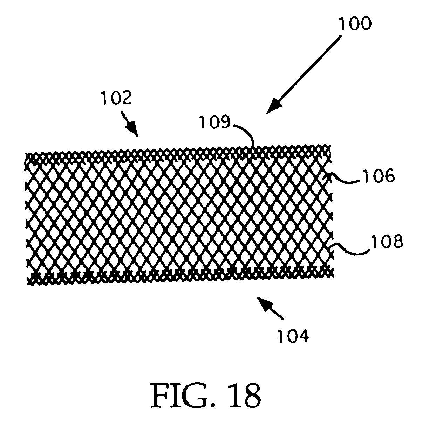

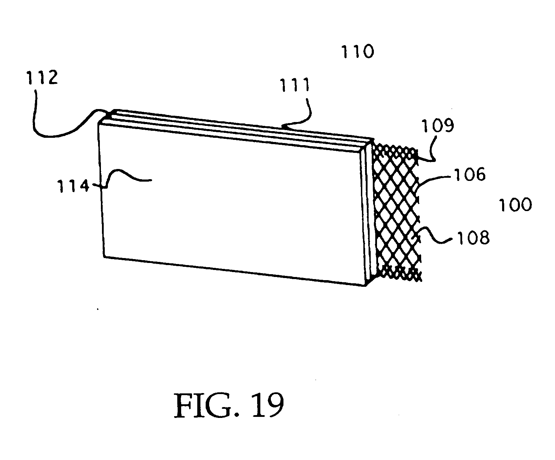

Referring to FIGS. 18 and 19 exemplary embodiments of current collectors of the invention will now be described.

Referring first to FIG. 18, an expanded screen current collector 100 is illustrated wherein top and bottom side edges 102 and 104, respectively, are coined or bent inwardly as shown.

The expanded screen current collector 100 is formed from a flat sheet of metal, such as titanium or stainless steel, cut and expanded to form openings 106 between strings 108 which extend generally from the bottom edge 104 to the top edge 102. The fabrication of the original flat sheet material and the cutting and expansion thereof may be primarily in accordance with conventional techniques which will not be described in detail herein. One difference, however, is that the initial flat sheet material is formed to have a height (between uncoined side edges 102 and 104) somewhat greater than the height that would be used for a conventional expanded screen current collector. A sheet having greater height is employed such that, after coining, the height of the coined current collector matches the height of the selected cell housing.

Opposing side edges of the slot sheet material are bent or coined inwardly. (By "inwardly", it is meant that the top side edge 102 is bent downwardly and the bottom side edge 104 is bent upwardly.) The side edges are bent inwardly by an amount sufficient to reduce the height of the expanded screen current collector 100 to that of a conventional collector. The degree to which the side edges are bent inwardly may vary from collector to collector but will generally depend on the length of the projecting tines. Typically, a sufficient portion of the side edges will be bent inwardly to assure that the projecting tines remain flat against the side surface of the current collector. Coining of the side edges may be performed manually or provided an automated machine may be performed manually or an automated machine may be provided.

The expanded screen current collector 100 is thereafter employed as a component of an electrode structure illustrated in FIG. 19. More specifically, an electrode structure 110 is formed wherein the expanded current collector 100 is coated, on both side faces, with an active cathode material 111. The expanded screen current collector 110 with the cathode material 111 is mounted to a polymeric separator 112. An anode 114 is mounted to any opposing side surface of the polymeric separator 112. For clarity in illustrating the current collector, the structure of FIG. 19 is shown with a portion of the anode, separator and active cathode material cutaway. In actual electrode structures, the collector is completely covered.

In an exemplary embodiment, the expanded screen current collector 100 is formed of titanium. The active cathode material is formed of porous polycarbon monoflouride. The anode is formed of lithium coated onto a thin metal sheet. The electrode structure 110 may be employed within an electrochemical cell housing of the type illustrated in FIG. 6.

The resulting cell incorporating the electrode structure having the coined-edge expanded screen current collector is preferably employed within an implantable medical device such as a pacemaker or the like which is implanted within a human or animal.

Although not specifically shown, the invention may also be applied to woven current collectors, rather than expanded screen current collectors. Also, although the drawings illustrate that the entire top and bottom edges of the current collector are coined, in other embodiments, it may be desirable to coin only portions, such as end portions, of the side edges inwardly. Also, it may be desirable to coin different portions of the side edges by different amounts, i.e. a greater portion of side edges may be coined at the extreme ends of the side edges than at the middle of the side edges. In other embodiments, it may be desirable to coin only the top or only the bottom edge. Further, it may be desirable to coin the opposing ends of the current collector as well as, or in the alternative to, the side edges.

## Claims

1. An electrochemical cell for use in an implantable device, the electrochemical cell comprising an electrode structure (200), a housing (222) surrounding the electrode structure (200) and a non-aqueous electrolyte filling a portion of the housing, characterised in that the electrode structure comprises: a cathode structure having a cathode material (204) mounted on a metal current collector (202), the cathode material (204) formed of carbon, an active cathode compound, and first and second binding materials, wherein the first and second binding materials are soluble in a common solvent; an anode (208) ; and a separator (206) between the anode (208) and the cathode (204).

2. A cell as claimed in Claim 1, characterised in that the first binding material is acrylonitril resin and the second binding material is poly ethyhylene oxide.

3. A cell as claimed in Claim 1 or Claim 2, characterised in that the first and second binding materials are present in quantities of 2 percent to 15 percent by weight of the active cathode compound.

4. A cell as claimed in any preceding Claim, characterised in that the active material is selected from manganese dioxide, polycarbon monofluoride, cobalt oxide, and nickel oxide.

5. A cell as claimed in any preceding Claim, characterised in that the current collector is an expanded screen current collector (202) or a foil current collector (12), and optionally includes aluminium.

6. A cell as claimed in any preceding Claim, characterised in that the anode of the electrode structure (200) is of lithium, sodium, calcium, or alloys thereof.

7. A cell as claimed in any preceding Claim, characterised in that the housing (222) includes nickel, the cathode includes polycarbon monofluoride and the current collector (202) of the electrode structure is of aluminium and is positioned between the housing (222) and the polycarbon monofluoride of the cathode (204).

8. A cell as claimed in any preceding Claim, characterised in that the non-aqueous electrolyte comprises lithium perchlorate dissolved in propylene carbonate, or comprises lithium hexafluoroarsenate dissolved in tetrahydrofurane.

9. A cell as claimed in any preceding Claim, characterised in that the separator is a polymeric separator (16).

10. A cell as claimed in any preceding Claim, characterised in that the housing (222) is cylindrical and the electrode structure (200) is wound in a spiral configuration.

11. A cell as claimed in any preceding Claim, characterised in that the cell is a button cell.

12. A cell as claimed in any of Claims 1 to 9, characterised in that the housing (28) is substantially rectangular and a plurality of the electrode structures (30,32,34,36) are mounted in parallel within the housing (28).

13. A cell as claimed in any of Claims 1 to 9 characterised in that the housing is rectangular (112) and the electrode structure (100) has a spiral-wound oval shape with an overall length substantially equal to the interior length of the housing and with an overall width substantially equal to the interior width of the housing.

14. A cell as claimed in Claim 13, characterised by means (114) for maintaining a substantially uniform tightness of the electrode structure (100).

15. A cell as claimed in Claim 14, characterised in that the means for maintaining a substantially uniform tightness comprises a leaf spring (114) mounted between an interior wall of the housing (112) and a free end (116) of the electrode structure (100).

16. A cell as claimed in any preceding Claim, characterised by at least one electrical connection (118) to the metal anode (104) and at least one electrical connection (120) to the solid cathode (106).

17. A cell as claimed in any of Claims 1 to 9, characterised in that at least a portion of a side edge of the current collector (100) is coined inwardly.

18. A cell as claimed in Claim 17, characterised in that the current collector (100) is formed from a material selected from titanium, stainless steel and aluminum and optionally has a thickness no greater than 0.020 inches (0.51 mm).

19. A cell as claimed in Claim 17 or Claim 18, characterised in that at least a portion of opposing side edges (102,104) of the collector (100) are coined inwardly, or the entire side edge of the current collector (100) is coined inwardly.

20. A method for fabricating an electrochemical cell of an implantable device, characterised by the steps of: preparing a cathode material (204); fabricating a metal current collector (202) ; fabricating an electrode structure (200) by mounting the cathode material (204) to the electrode structure (200), mounting the electrode structure (200) to one side of a separator (206), and mounting an anode (208) to an opposing side of the separator (206); mounting the electrode structure (200) within a housing (222); and filling a portion of the housing (222) with a non-aqueous electrolyte solution; the cathode material (204) being prepared by: mixing a first binding material with a liquid solvent to produce a solution, wherein the first binding material is soluble in the solvent; adding a second binding material to the solution, wherein the second binding material is also soluble in the solvent and wherein the first and second binding materials are selected from a group of binding materials soluble in the solvent to react with each other; and adding carbon and an active cathode compound to the solution forming a cathode material (204).

21. A method as claimed in Claim 20, characterised in that the first binding material is acrylonitril resin, the second binding material is poly ethyhylene oxide and the solvent is acetonitrile.

22. A method as claimed in Claim 20 or Claim 21, characterised in that the step of fabricating the electrode structure (200) includes the steps of: heating the cathode material (204) until a portion of the solvent has evaporated and the cathode material (204) achieves a spreadable consistency; spreading the cathode material (204) onto a metal surface until dry, yielding a flexible film; and mounting the flexible film to a current collector (202).

23. A method as claimed in any of Claims 20 to 22, characterised in that the current collector is an expanded screen current collector (100).

24. A method as claimed in Claim 20 or Claim 21, characterised in that the step of fabricating the electrode structure (200) includes the steps of: spreading the cathode material (14) onto a metal foil current collector (12) before a substantial portion of the solvent within the cathode material evaporates; and allowing the solvent to evaporate from the cathode material (14) while the cathode material (14) is spread on the metal foil current collector (12).

25. A method as claimed in any of Claims 20 to 24, characterised in that the active cathode compound is selected from manganese dioxide, polycarbon monoflouride, cobalt oxide, and nickel oxide.

26. A method as claimed in any of Claims 20 to 26, characterised in that the first and second binding materials are present in quantities of 2 percent to 15 percent by weight of the active cathode compound.

27. A method as claimed in any of Claims 20 to 26, characterised in that the metal anode is formed of a material selected from lithium, sodium, calcium and alloys thereof.

28. A method as claimed in any of Claims 20 to 27, characterised in that the current collector (100) is formed from a material selected from titanium, stainless steel and aluminum.

29. A method as claimed in any of Claims 20 to 28, characterised in that the housing is rectangular (28) and has a predetermined interior length, width, and height, and the step of fabricating the electrode structure includes the additional steps of: providing a flat electrode structure (100) having a width equal to the height of the housing (28); and winding the electrode structure (100) into an oval shape having an overall length substantially equal to the interior length of the housing and having an overall width substantially equal to the interior width of the housing.

30. A method as claimed in Claim 29, characterised in that the step of winding the electrode structure into an oval shape (100) comprises the step of winding the electrode structure around the mandrel whose length is selected to yield a wound electrode structure having an overall length and width matching the predetermined length and width of the interior of the housing.

31. A method as claimed in Claim 30, characterised in that the mandrel is cylindrical and the method further comprising the steps of removing the mandrel after winding the electrode structure (100); and compressing the electrode structure (100) into an oval shape.

32. A method as claimed in any of Claims 20 to 31, in which the cell requires a current collector (100) of a predetermined height, characterised in that the step of fabricating the current collector (100) comprises the steps of forming a current collector (100) having a height greater than the predetermined height; and coining a side edge of the current collector (100) inwardly by an amount sufficient to reduce the height of the current collector (100) to the predetermined height.

33. A method as claimed in Claim 33, characterised in that the current collector (100) includes a pair of opposing side edges (102,104) and the step of coining the current collector (100) includes the steps of coining both opposing side (102,104) edges of the current collector (100).

34. A method as claimed in any of Claims 20 to 33, characterised in that the current collector (100) includes aluminum and the cathode includes polycarbon monoflouride.

35. A method as claimed in any of Claims 20 to 26, characterised in that the housing is cylindrical and the method further comprises the step of winding the electrode structure into a spiral configuration before mounting within the housing.

36. A method as claimed in Claim 25 and in any of Claims 27 to 35, characterised in that the housing includes nickel and the aluminum of the cathode is interposed between the housing and the polycarbon monoflouride.

37. A method as claimed in any of Claims 20 to 36, characterised in that the non-aqueous electrolyte comprises lithium perchlorate dissolved in propylene carbonate.

38. A method as claimed in any of Claims 20 to 34, characterised in that the housing (28) is substantially rectangular and the method further comprises the steps of forming a plurality of electrode structures (30,32,34,36) and mounting the structures in parallel within the rectangular housing (28).
